Europäisches Patentamt

European Patent Office

Office européen des brevets

Veröffentlichungsnummer: **0 279 170**
**A2**

# EUROPÄISCHE PATENTANMELDUNG

Anmeldenummer: 88100196.0

Int. Cl.4: **B01J 21/08**

Anmeldetag: 08.01.88

Priorität: 27.01.87 DE 3702363

Veröffentlichungstag der Anmeldung:
24.08.88 Patentblatt 88/34

Benannte Vertragsstaaten:
CH DE FR GB IT LI

Anmelder: **Siemens Aktiengesellschaft Berlin**
**und München**
**Wittelsbacherplatz 2**
**D-8000 München 2(DE)**

Erfinder: **Aulich, Hubert, Dr. Ph. D.**
**Schwarzstrasse 3**
**D-8000 München 90(DE)**
Erfinder: **Urbach, Hans-Peter, Dr. rer. nat.**
**Auerfeldstrasse 16**
**D-8000 München 90(DE)**
Erfinder: **Eisenrith, Karl-Heinz**
**Triftstrasse 1**
**D-8162 Schliersee(DE)**

**Heterogener siliziumdioxidhaltiger Katalysator.**

Die Erfindung betrifft einen heterogenen Katalysator auf Siliziumdioxidbasis, sowie ein Verfahren zu seiner Herstellung, wobei der Katalysator ein aus katalytisch wirksame Zuschläge enthaltenden Glaskörpern großer Oberfläche durch Auslaugen mit Mineralsäure hergestelltes poröses Material ist und die Zuschläge in Form von in heißer Mineralsäure unlöslichen Metalloxiden in das Netzwerk des Glaskörpers eingebaut sind. Der Katalysator weist eine hohe aktive Oberfläche auf und ist wegen nur geringer unerwünschter Verunreinigungen hoher Reaktivität und hoher Strukturbeständigkeit bis ca. 1000°C universell einsetzbar.

EP 0 279 170 A2

## Heterogener siliziumdioxidhaltiger Katalysator.

Die Erfindung betrifft einen heterogenen Katalysator auf Siliziumdioxidbasis, sowie ein Verfahren zu seiner Herstellung.

Heterogene Katalysatoren sind Stoffe, die die Reaktionsgeschwindigkeit einer chemischen Reaktion erhöhen, unverändert daraus hervorgehen und mit den Reaktionspartnern (Substraten) nicht in der gleichen Phase vorliegen.

Für flüssige und gasförmige Reaktionspartner werden überwiegend feste und somit heterogene Katalysatoren eingesetzt. Diese lassen sich besonders leicht handhaben und sind außerdem gut von den Reaktionsprodukten abzutrennen und somit wieder einsetzbar.

Heterogene Reaktionen laufen nur an den Phasengrenzflächen der die Reaktionspartner enthaltenden Phasen ab. Bei einem festen Katalysator und flüssigen oder gasförmigen Substraten hat deshalb die zur Verfügung stehende freie Oberfläche des Katalysators entscheidenden Einfluß auf die Reaktionsgeschwindigkeit. Um heterogen katalysierte Reaktionen weiter zu beschleunigen, ist es daher nötig, die Katalysatoroberfläche möglichst groß zu gestalten.

Als Grundmaterial bieten sich daher natürlich vorkommende poröse Materialien an, wie zum Beispiel Kieselgur, Bentonite, Kieselgel, Bimsstein, Aluminiumsilikate, Zeolithe oder Aluminiumoxid, wie es zum Beispiel in Römpps Chemie-Lexikon, Herausgeber O.-A. Neumüller, 8. Auflage, Stuttgart 1983, Band 3, Seite 2052 bis 2058, zu entnehmen ist.

Für einige Anwendungsgebiete können bereits diese Grundmaterialien als Katalysatoren eingesetzt werden. Wegen der sauren Eigenschaften der freien Si-OH-Gruppierungen finden siliziumdioxidhaltige Materialien Anwendung in der Säure/Basen-Katalyse. Dabei kann der saure Charakter des Katalysatormaterials durch Zuschläge geeigneter Metalloxide wie zum Beispiel Aluminiumoxid, Magnesiumoxid usw. weiter variiert werden.

In Redox-Katalysatoren bilden die leicht reduzierbaren oder instabilen Oxide von Übergangsmetallen, wie zum Beispiel Metalle der Nebengruppen 7a, 8 und 1b des Periodensystems (zum Beispiel Eisen, Kupfer, Nickel etc.) die katalytisch wirksamen Komponenten.

Zur Aufbringung dieser katalytisch wirksamen Komponenten auf das Trägermaterial werden Fällungs-und Imprägnierverfahren angewandt. Aus einer flüssigen Phase (Lösung oder Schmelze) wird dabei die katalytisch wirksame Komponente oder eine in diese umwandelbare Vorstufe auf dem Grundkörper fixiert. Dies kann sowohl über eine rein physikalische Belegung der Oberfläche erfolgen, als auch über eine chemische Bindung, vorzugsweise mit freien Si-OH-Gruppen bei Siliziumdioxid.

Wird die katalytisch wirksame Komponente in Form ihrer Vorstufe fixiert, so muß noch eine Aktivierung erfolgen. Dies kann ein Hochtemperaturschritt unter oxidierenden oder auch reduzierenden Bedingungen ($O_2$-oder $H_2$-Atmosphäre) sein.

Die genannten siliziumdioxidhaltigen Katalysatorsysteme auf der Basis von natürlich vorkommenden Ausgangsmaterialien weisen alle einen relativ hohen Verunreinigungsgrad auf, der den Einsatz in speziellen Anwendungen erschwert oder sogar ausschließt. Deshalb wird meist ein reines Siliziumdioxid bevorzugt.

Synthetisch hergestelltes Siliziumdioxidmaterial, das zum Beispiel aus Wasserglas oder durch Flammenhydrolyse organischer oder anorganischer siliziumhaltiger Verbindungen gewonnen wird, zeigt zwar eine hohe Reinheit, ist jedoch nur umständlich zu gewinnen und gegenüber natürlichem Material zu teuer.

Aufgabe der Erfindung ist es nun, einen heterogenen Katalysator auf Siliziumdioxidbasis anzugeben, der aus natürlichen Rohstoffen einfach herzustellen ist, stark porös ist, keine unerwünschten Verunreinigungen zeigt und bei dem das Einbringen der katalytisch aktiven Komponente in den Herstellungsprozeß integriert ist.

Diese Aufgabe wird erfindungsgemäß dadurch gelöst, daß der Katalysator ein aus katalytisch wirksame Zuschläge enthaltenden Glaskörpern großer Oberfläche durch Auslaugen mit Mineralsäure hergestelltes poröses Material ist.

Weiterhin liegt es im Rahmen der Erfindung, daß als katalytisch wirksame Zuschläge in heißer Mineralsäure unlösliche Oxide in das amorphe Neztwerk des Glaskörpers eingebaut sind und daß diese Zuschläge Oxide von Übergangselementen sind.

Weitere Ausgestaltungen der Erfindung, insbesondere ein Verfahren zur Herstellung des Katalysators, sind den Unteransprüchen zu entnehmen.

Der erfindungsgemäße Katalysator weist folgende Vorteile auf:
einfache und kostengünstige Herstellung aus billigen Ausgangsmaterialien,
starke Porösität und damit große BET-Oberfläche (nach Brunauer, Emmet und Teller) von ca. 180 m² pro Gramm,
geringer Gehalt an Verunreinigungen, insbesondere ein Alkaligehalt von kleiner 0,1 Gewichts-ppm,
stabile mesoporöse Struktur, die bis 1000°C weitgehend erhalten bleibt,
leichte Vermahlbarkeit und Rieselfähigkeit ermöglicht das Granulieren zum Beispiel zu Tabletten und Briketts,

die OH-Gruppedichte an der Oberfläche läßt sich durch thermische Behandlung reduzieren und damit der saure Charakter des Katalysators variieren.

Durch geeignete Zuschläge, insbesondere Aluminiumoxid, lassen sich die technisch interessanten Zeolithe herstellen.

Zusätzlich zu den ins $SiO_2$-Netzwerk fest eingebauten Oxiden lassen sich weitere katalytisch wirksame Komponenten chemisch an freie SiOH-Gruppen binden oder über ein Imprägnierverfahren auf der Oberfläche des Katalysatormaterials aufbringen.

Bei Redox-Katalysatoren kann eine Aktivierung nötig sein, die zum Beispiel aus einer thermischen Reduktion der Metalloxide mittels Wasserstoffgas bestehen kann.

Im folgenden wird die Erfindung, insbesondere das Verfahren zur Herstellung des Katalysators, anhand eines Ausführungsbeispiels näher erläutert.

Als Ausgangsmaterial dient bergmännisch abgebauter Quarzsand. Neben glasbildenden Zuschlägen von Aluminiumoxid und Karbonaten von Alkali-und Erdalkalimetallen werden dem Sand die gewünschten katalytisch wirksamen Metalloxide (zum Beispiel Eisenoxid, Zinkoxid usw.) zugesetzt und das Ganze durch Schmelzen in eine homogene Glasphase überführt. Dabei wird der $SiO_2$-Gehalt der Schmelze auf 50 bis 70 Gewichtsprozent eingestellt. Zur Herstellung eines Glaskörpers mit großer Oberfläche wird die Schmelze in die Faserform übergeführt; der Durchmesser der Fasern sollte vorzugsweise unterhalb 500 μm liegen. In heißer Mineralsäure, vorzugsweise 3 bis 6 n Salzsäure von mindestens 95°C werden die glasbildenden Zuschläge und die übrigen Verunreinigungen wieder ausgelaugt und die Fasern anschließend säurefrei gewaschen. Die katalytisch wirksamen Metalloxide sind fest in das $SiO_2$-Netzwerk eingebaut und werden daher von der heißen Säure nicht gelöst. Es verbleibt ein fasriges poröses Siliziumdioxid, das neben den gewünschten Metalloxiden nur geringe Verunreinigungen im ppm-Bereich aufweist.

Die ausgelaugten Fasern von vorzugsweise 5 bis 10 μm Durchmesser lassen sich zur weiteren Verarbeitung leicht auf eine gewünschte Schüttdichte vermahlen und beispielsweise zu Briketts pressen.

Wegen der hohen Reinheit, der hohen Reaktivität und der optimalen Strukturstabilität läßt sich der Katalysator universell einsetzen.

## Ansprüche

1. Heterogener Katalysator auf Siliziumdioxidbasis, **dadurch gekennzeichnet,** daß der Katalysator ein aus katalytisch wirksame Zuschläge enthaltenden Glaskörpern großer Oberfläche durch Auslaugen mit Mineralsäure hergestelltes poröses Material ist.

2. Katalysator nach Anspruch 1, **dadurch gekennzeichnet,** daß als katalytisch wirksame Zuschläge in heißer Mineralsäure unlösliche Metalloxide in das amorphe Netzwerk des Glaskörpers eingebaut sind.

3. Katalysator nach Anspruch 1 oder 2, **dadurch gekennzeichnet,** daß die Zuschläge Oxide von Übergangsmetallen sind.

4. Verfahren zum Herstellen eines Katalysators nach einem der Ansprüche 1 bis 3, **dadurch gekennzeichnet, daß**

a) als Ausgangsmaterial Siliziumoxid haltige Mineralien verwendet werden, die mit glasbildenden Zuschlägen von Aluminiumoxid und Karbonaten und/oder Oxiden von Alkali-und Erdalkalimetallen und katalytisch wirksamen Zuschlägen von in heißer Mineralsäure unlöslichen Metalloxiden durch Schmelzen in eine homogene Glasphase überführt werden,

b) aus der Glasschmelze Glaskörper großer Oberfläche hergestellt werden,

c) die Glaskörper einem Auslaugprozeß in heißer Mineralsäure unterworfen werden und

d) das entstandene poröse Material säurefrei gewaschen wird.

5. Verfahren nach Anspruch 4, **dadurch gekennzeichnet,** daß als Ausgangsmaterial gemäß Verfahrensschritt a) bergmännisch abgebauter Quarzsand verwendet wird.

6. Verfahren nach Anspruch 4 oder 5, **dadurch gekennzeichnet,** daß gemäß Verfahrensschritt a) der Gehalt an Siliziumdioxid in der Glasschmelze auf einem Bereich zwischen 50 und 70 Gewichtsprozent eingestellt wird.

7. Verfahren nach einem der Ansprüche 4 bis 6, **dadurch gekennzeichnet,** daß die Glaskörper gemäß Verfahrensschritt b) durch Herstellung von Glasfasern mit einheitlichem Durchmesser kleiner 500 μm, vorzugsweise von 5 bis 10 μm erzeugt werden.

8. Verfahren nach einem der Ansprüche 4 bis 7, **dadurch gekennzeichnet,** daß im Anschluß an Verfahrensschritt d) das poröse Material vermahlen und zu größeren Formkörpern gepreßt wird.